# EUROPÄISCHE PATENTSCHRIFT

(11) **EP 4 126 569 B1**
(45) Veröffentlichungstag und Bekanntmachung des Hinweises auf die Patenterteilung: **19.03.2025**
(21) Anmeldenummer: 21716090.2
(22) Anmeldetag: 24.03.2021
(51) Int. Cl.: B60C 23/04

(54) **VERFAHREN ZUM ÜBERWACHEN DES REIFENDRUCKS EINES FAHRZEUGS**
METHOD FOR MONITORING THE TYRE PRESSURE OF A VEHICLE
PROCÉDÉ DE SURVEILLANCE DE LA PRESSION DE GONFLAGE D'UN VÉHICULE

(30) Priorität: 02.04.2020 DE 102020109179
(43) Veröffentlichungstag der Anmeldung: 08.02.2023
(73) Patentinhaber: Huf Baolong Electronics Bretten GmbH, 75015 Bretten (DE)
(72) Erfinder: STEMMLER, René, 75210 Keltern (DE); LITCHENHAUS, Frank, 76199 Karlsruhe (DE)
(74) Vertreter: Twelmeier Mommer & Partner
(86) Internationale Anmeldenummer: PCT/EP2021/057601
(87) Internationale Veröffentlichungsnummer: WO 2021/197966

(56) Entgegenhaltungen:
- JP-A- 2012 148 646
- US-A1- 2003 011 472
- US-A1- 2004 046 651

## Beschreibung

Die Erfindung betrifft ein Verfahren zum Überwachen des Reifendrucks eines Fahrzeugs. Ein Verfahren mit den im Oberbegriff des Anspruchs 1 angegebenen Merkmalen ist aus JP 2012 148646 A bekannt. Ähnliche Verfahren sind aus der DE102008004953 A1 und US2004046651 A1 bekannt.

Reifendrucküberwachungseinheiten, die einen Drucksensor und in der Regel auch einen Temperatursensor enthalten, werden an Fahrzeugrädern montiert und können dann drahtlos Informationen über den Reifendruck zur Verfügung stellen, d.h. an eine zentrale Auswerteeinheit des Fahrzeugs senden.

Ein ständiges Problem bei der Entwicklung von Reifendrucküberwachungseinheiten ist ein Zielkonflikt zwischen einem möglichst stromsparenden Betrieb einerseits und einer möglichst aktuellen und zuverlässigen Bereitstellung von Druckdaten. Je häufiger Informationen über den Reifendruck gesendet werden, desto größer ist grundsätzlich der Energieverbrauch einer Reifendrucküberwachungseinheit.

Ein Problem bei der Optimierung von Reifendrucküberwachungseinrichtungen ist dabei insbesondere, dass einem Fahrer eines Fahrzeugs ein beim Parken aufgetretener Druckverlust, der die Fahrsicherheit beeinträchtigt, möglichst frühzeitig mitgeteilt werden soll. Bei dem aus der DE 10 2008 004 953 A1 bekannten Verfahren wird deshalb bei parkendem Fahrzeug der Reifendruck in vorgegebenen Zeitintervallen gemessen und mit einem vorgegebenen Schwellenwert verglichen. Wenn dabei ein Unterschreiten des Schwellenwerts festgestellt wird, wird der ansonsten während des Parkens deaktivierte Sender der Reifendrucküberwachungseinrichtung aktiviert und mit dem Aussenden von Druckdaten in vorgegebenen Zeitintervallen von etwa 10 bis 20 Sekunden begonnen. Der Empfänger einer zentralen Auswerteeinheit wird aktiviert, sobald die Zündung des Fahrzeugs eingeschaltet ist, so dass der Fahrer dann innerhalb von 10 bis 20 Sekunden vor einem kritischen Druckverlust gewarnt werden kann.

Aufgabe der vorliegenden Erfindung ist es, einen Weg aufzuzeigen, wie die Reifendrucküberwachung energieeffizient bei parkendem Fahrzeug verbessert werden kann.

Diese Aufgabe wird durch ein Verfahren mit den im Anspruch 1 angegebenen Merkmalen gelöst. Vorteilhafte Weiterbildungen der Erfindung sind Gegenstand von Unteransprüchen.

Bei einem erfindungsgemäßen Verfahren wird der Reifendruck auch bei parkendem Fahrzeug gemessen und Druckdaten werden in vorgegebenen Zeitabständen gesendet. Ein Empfänger einer Auswerteinheit des Fahrzeugs wird in dazu passenden Zeitabständen aktiviert. Vorteilhaft liegen somit bereits bei Fahrzeugstart aktuelle Reifendruckdaten vor, so der Fahrer sofort vor einem die Fahrsicherheit beeinträchtigenden Druckverlust gewarnt werden kann.

Eine übermäßige Belastung der Fahrzeugbatterie wird mit einem erfindungsgemäßen Verfahren vermieden, da der Empfänger nicht ständig empfangsbereit ist, sondern in Zeitabständen aktiviert wird, die zu den Zeitabständen passen, in denen die Reifendrucküberwachungseinrichtungen des Fahrzeugs Druckdaten senden.

Bevorzugt senden die Reifendrucküberwachungseinrichtungen in Zeitabständen, die konstant vorgegeben sind oder um einen konstanten Sollwert variiert werden, um zu vermeiden, dass der Empfang durch gleichzeitige Sendungen verschiedener Reifendrucküberwachungseinheiten gestört wird. Die Variationen um den Sollwert betragen bevorzugt nicht mehr als das Zwanzigfache, bevorzugt nicht mehr als das Zehnfache der Dauer einer Sendung, und nicht mehr als ein Tausendstel des Sollwerts, bevorzugt weniger als ein Zehntausendstel.

Es ist aber auch möglich, die Zeitabstände deutlich zu verändern, insbesondere mit zunehmender Parkdauer zu vergrößern, beispielsweise zu verdoppeln. Entsprechende Änderungen können der Auswerteeinheit in einem Datentelegramm, das Reifendruckdaten enthält, mitgeteilt werden oder nach einem vorgegebenen Schema erfolgen, das der Auswerteeinheit bekannt ist.

Für ein erfindungsgemäßes Verfahren ist nicht erforderlich, dass der Empfänger in denselben Zeitabständen aktiviert wird, in denen eine Reifendrucküberwachungseinrichtung Druckdaten sendet. Insbesondere wenn Druckdaten in konstant vorgegebenen Zeitabständen gesendet werden, kann zur Schonung der Fahrzeugbatterie vorgesehen sein, dass der Empfänger nur für jede zweite oder jede dritte Sendung aktiviert wird oder sogar noch seltener. Bei längerer Parkdauer kann so die Fahrzeugbatterie entlastet werden. Beispielsweise kann in den ersten zwölf Stunden einer Parkdauer der Empfänger für jede Sendung aktiviert werden, danach nur noch für jede zweite Sendung oder noch seltener, beispielsweise vom zweiten bis fünften Tag nur noch für jede vierte Sendung und danach nur noch für jede zehnte Sendung.

In der Regel haben Fahrzeuge mehrere Räder, an denen jeweils eine Reifendrucküberwachungseinrichtung montiert ist. Wenn ein einziger Empfänger für alle Reifendrucküberwachungseinrichtungen verwendet wird, wird dieser nach dem Empfang einer Sendung nur dann deaktiviert, wenn momentan keine Sendung einer anderen Reifendrucküberwachungseinrichtung erwartet wird. Der Einfachheit halber wird im Folgenden oft der Fall einer einzigen Reifendrucküberwachungseinrichtung betrachtet. Bedingungen für eine Deaktivierung des Empfängers sind kumulativ, d.h. der Empfänger bleibt aktiviert, wenn von irgendeiner der Reifendrucküberwachungseinheiten eine Sendung erwartet wird und wird erst dann deaktiviert, wenn die Bedingungen einer Deaktivierung in Bezug auf alle Reifendrucküberwachungseinheiten erfüllt sind.

Eine vorteilhafte Weiterbildung der Erfindung sieht vor, dass jede Reifendrucküberwachungseinheit des Fahrzeugs und auch die Auswerteeinheit einen Zeitgeber enthalten. Der Zeitgeber der Reifendrucküberwachungseinheit ermittelt die Zeiten, zu denen Druckdaten gesendet werden und der Zeitgeber der Auswerteeinheit ermittelt entsprechend die Zeiten, zu denen der Empfänger aktiviert wird. Die Zeitgeber messen also jeweils die Zeit und sorgen für eine Aktivierung. Da die Zeitgeber wie jede Uhr eine Gangungenauigkeit aufweisen, die durch starke Temperaturschwankungen verstärkt werden kann, ist bevorzugt, dass der Zeitgeber der Auswerteeinheit bei jedem Empfang einer Sendung nachjustiert wird. Wenn beispielsweise eine Reifendrucküberwachungseinheit alle 5 Minuten Druckdaten senden soll, kann der Zeitgeber der Auswerteeinheit bei jedem Empfang von Druckdaten der betreffenden Reifendrucküberwachungseinheit zurückgesetzt werden und so mit dem Zeitgeber der Reifendrucküberwachungseinheit synchronisiert werden.

Eine weitere vorteilhafte Weiterbildung der Erfindung sieht vor, dass die Reifendrucküberwachungseinheit in Abhängigkeit von Signalen des Beschleunigungssensors zwischen einem Fahrtmodus und einem Parkmodus wechselt, wobei Reifendruckdaten in dem Parkmodus in anderen Zeitabständen, insbesondere längeren Zeitabständen, als in dem Fahrtmodus ausgesandt werden. Während der Fahrt kann der Empfänger ständig empfangsbereit sein, so dass Druckdaten in kurzen Zeitabständen empfangen werden können.

Bevorzugt bleibt der Empfänger nach dem Abschalten des Motors des Fahrzeugs noch während einer Nachlaufzeit aktiviert. Zweck dieser Nachlaufzeit ist der Empfang einer (ersten) Sendung während das Fahrzeug parkt. Aus dem Zeitpunkt des Empfangs der ersten Sendung kann die Auswerteeinheit dann den Zeitpunkt ermitteln, zu dem die nächste Sendung der betreffenden Reifendrucküberwachungseinrichtung erwartet wird. Die einzelnen Reifendrucküberwachungseinrichtungen ermitteln anhand von Signalen ihrer Beschleunigungssensoren, wann das Fahrzeug zum Stillstand gekommen ist. In der Regel ermittelt dabei jede Reifendrucküberwachungseinheit wegen Rauschen und Störeinflüssen einen etwas anderen Zeitpunkt. Die Nachlaufzeit beträgt bevorzugt nicht mehr als das Doppelte der Zeitabstände, in denen der Empfänger bei parkendem Fahrzeug zunächst aktiviert wird. Diese Zeitabstände können bei längeren Parkdauern erhöht werden, um Energie zu sparen. In Bezug auf die Nachlaufzeit sind hier deshalb die kürzesten Zeitabstände gemeint, in denen bei parkendem Fahrzeug der Empfänger aktiviert wird, also die Zeitabstände bevor sie wegen längerer Parkdauer verlängert werden.

Die Nachlaufzeit kann beendet werden, wenn nach dem Abstellen des Motors von jeder Reifendrucküberwachungseinrichtung eine Sendung mit Druckdaten empfangen wurde. Da wegen ungünstiger Empfangs- oder Sendebedingungen oder in Folge eines Defekts der Fall eintreten kann, dass von einer Reifendrucküberwachungseinheit keine Sendungen empfangen werden können, ist bevorzugt vorgesehen, dass der Empfänger nach einer Maximalzeit deaktiviert wird, auch wenn bis dahin noch nicht von allen Reifendrucküberwachungseinheiten eine Sendung empfangen wurde. Die Maximalzeit kann beispielsweise 5 bis 10 Minuten betragen.

Wenn der Empfänger aktiviert worden ist, kann er deaktiviert werden, sobald die erwartete Sendung empfangen wurde bzw. wenn von jeder Reifendrucküberwachungseinrichtung die erwartete Sendung empfangen wurde. Falls eine erwartete Sendung nicht empfangen wurde, kann dies daran liegen, dass der Empfänger zu spät aktiviert wurde, etwa wegen einer Gangungenauigkeit eines Zeitgebers, oder die Reifendrucküberwachungseinrichtung wegen eines Defekts nicht (mehr) sendet. In diesem Fall kann der Empfänger einfach längere Zeit aktiviert bleiben, beispielsweise bis zu dem Zeitpunkt, zu dem die nächste Sendung dieser Reifendrucküberwachungseinrichtung erwartet wird. Wird auch dann keine Sendung empfangen, kann angenommen werden, dass ein Empfang von Sendungen der betreffenden Reifendrucküberwachungseinrichtung nicht möglich ist und der Empfänger deaktiviert werden kann (sofern keine Sendungen anderer Reifendrucküberwachungseinheiten erwartet werden). Alternativ kann für jede Aktivierung ein Zeitfenster vorgegeben sein, nach dessen Ablauf der Empfänger deaktiviert wird, unabhängig davon, ob eine Sendung von der betreffenden Reifendrucküberwachungseinrichtung empfangen wurde oder nicht. Wurde in einem solchen Zeitfenster keine Sendung empfangen, kann das Zeitfenster bei späteren Aktivierungen schrittweise ausgedehnt werden bis auf den erwarteten Abstand zwischen Sendungen.

Wenn für jede Aktivierung ein Zeitfenster vorgegeben ist, nach dem der Empfänger deaktiviert wird, ist diese Zeitspanne bevorzugt wesentlich kleiner als die Zeitabstände zwischen Sendungen einer Reifendrucküberwachungseinrichtung. Beispielsweise kann das Zeitfenster nur 1 Sekunde oder weniger betragen, vorzugsweise nicht mehr als 100 Millisekunden.

Weitere Einzelheiten und Vorteile der Erfindung werden an einem Ausführungsbeispiel unter Bezugnahme auf die beigefügte Zeichnung erläutert:
- Fig. 1: eine schematische Darstellung eines Reifendrucküberwachungssystems eines Fahrzeugs;
- Fig. 2: ein Ablaufdiagramm für die zentrale Auswerteeinheit eines Reifenüberwachungssystems; und
- Fig. 3: ein weiteres Ausführungsbeispiel eines Ablaufdiagramms für die zentrale Auswerteeinheit eines Reifenüberwachungssystems.

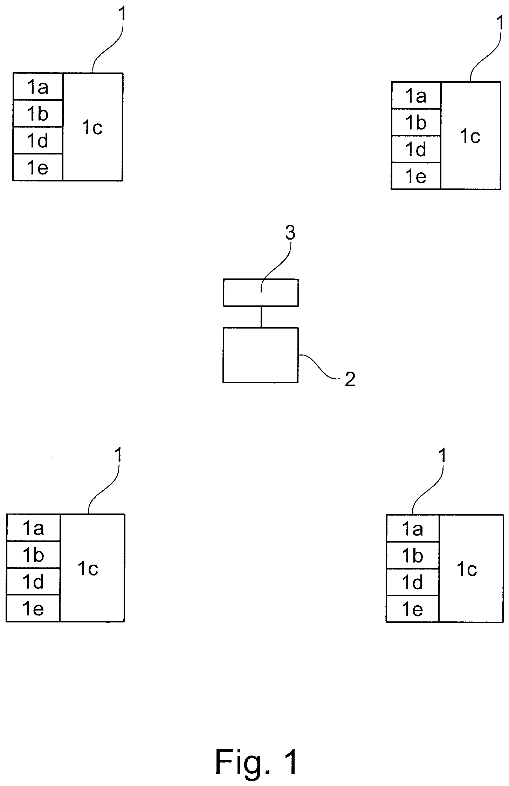

Ein Reifendrucküberwachungssystem, wie es in Fig. 1 schematisch dargestellt ist, besteht aus Reifendrucküberwachungseinrichtungen 1, die jeweils an einem der Räder eines Fahrzeugs montiert sind, und einer zentralen Auswerteeinheit 2. Jede Reifendrucküberwachungseinrichtung 1 enthält einen Drucksensor 1a zum Messen des Reifendrucks, einen Beschleunigungssensor 1b, einen Temperatursensor 1c, eine Stromquelle 1d, z.B. eine Batterie, und einen Sender 1e zum drahtlosen Übertragen von Reifendruckdaten. Druckdaten werden in Form von Datentelegrammen übertragen, die jeweils eine charakteristische Kennung der sendenden Reifendrucküberwachungseinheit sowie Druck- und Temperaturdaten enthalten. Die zentrale Auswerteeinheit 2 weist einen Empfänger 3 auf, um Datentelegramme der Reifendrucküberwachungseinheiten 1 zu empfangen.

Während der Fahrt ist der Empfänger 3 ständig aktiviert, damit Daten über einen plötzlichen Druckverlust, beispielsweise wegen eines platzenden Reifens, die von Reifendrucküberwachungseinheiten 1 unverzüglich gesendet werden, so schnell wie möglich vorliegen. Beispielsweise kann die Auswerteeinheit über einen Bus, etwa ein CAN-Bus (Controller Area Network), mit Fahrzeugstabilisierungssystemen kommunizieren, die im Falle eines platzenden Reifens stabilisierend eingreifen können.

Die Reifendrucküberwachungseinrichtungen 1 können in einem Fahrtmodus und einem Parkmodus arbeiten. In dem Fahrtmodus werden in regelmäßigen zeitabständen Druckdaten gemessen und in längeren Zeitabständen gesendet, beispielsweise kann in Zeitabständen von 0,1 bis 5 Sekunden eine Druckmessung vorgenommen werden und eine Sendung in Zeitabständen von 1 Minute bis 3 Minuten. Wenn während der Fahrt ein kritischer Druckabfall festgestellt wird, kann die Mess- und Sendetätigkeit intensiviert werden. Beispielsweise kann ein kritischer Druckabfall sofort gesendet werden und danach eine Sendung im Abstand von wenigen Sekunden erfolgen, beispielsweise 1 Sekunde bis 10 Sekunden.

Im Parkmodus werden Druckdaten gemessen und in vorgegebenen Zeitabständen gesendet, beispielsweise in Zeitabständen von 3 Minuten bis 10 Minuten. Im Parkmodus gesendete Datentelegramme können sich dabei in ihrem Format oder durch eine entsprechende Information von Datentelegrammen unterscheiden, die im Fahrtmodus gesendet werden. Die Reifendrucküberwachungseinheiten 1 wechseln in Abhängigkeit von Signalen ihrer Beschleunigungssensoren 1b zwischen dem Parkmodus und dem Fahrtmodus.

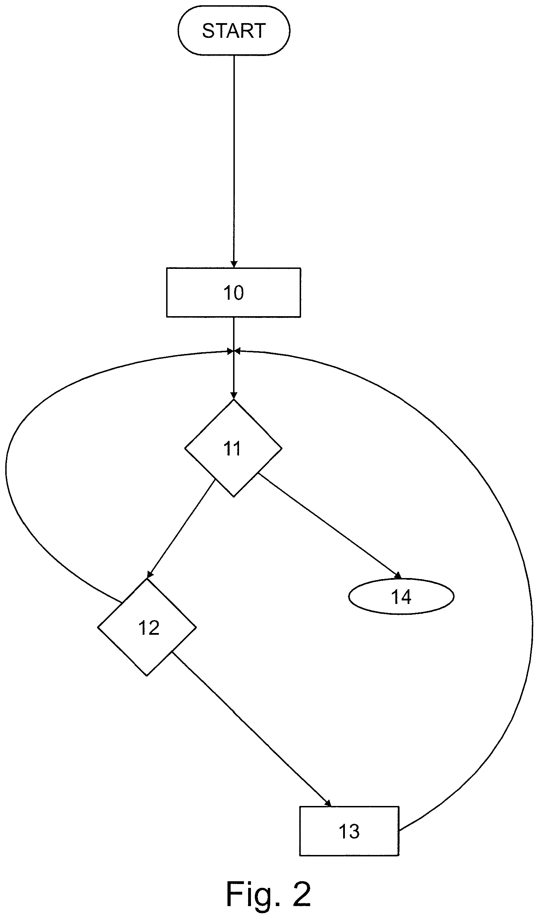

In Fig. 2 ist ein Ablaufdiagramm für die zentrale Auswerteeinheit eines solchen Reifendrucküberwachungssystem dargestellt. Dieses Ablaufdiagramm beginnt mit dem Parken des Fahrzeugs, also dem Abstellen der Zündung (Klemme 15 aus). Die Auswerteeinheit deaktiviert dann in Schritt 10 die Verbindung zum Fahrzeugbus, um die Belastung der Fahrzeugbatterie zu reduzieren. Der Empfänger 3 bleibt dabei aber aktiv und somit empfangsbereit für Sendungen der Reifendrucküberwachungseinheiten 1.

Der Empfänger 3 bleibt so lange empfangsbereit, bis entweder von allen Reifendrucküberwachungseinrichtungen 1 ein im Parkmodus gesendetes Datentelegramm empfangen wurde oder eine vorgegebene Zeitdauer vergangen ist (Schritt 11). Diese Zeitdauer wird als Nachlaufphase bezeichnet und ist so gewählt, dass bei ihrem Ablauf jede Reifendrucküberwachungseinheit im Parkmodus wenigstens ein Datentelegramm ausgesandt hat. Wurde also von einer Reifendrucküberwachungseinheit kein Datentelegramm empfangen, kann davon ausgegangen werden, dass ein Empfang nicht möglich ist, etwa wegen eines Defekts. Die Dauer der Nachlaufphase kann beispielsweise mehr als der Zeitabstand zwischen Sendungen einer Reifendrucküberwachungseinheit im Parkmodus und dem Doppelten des Zeitabstands zwischen Sendungen einer Reifendrucküberwachungseinheit im Parkmodus betragen. Gut geeignet sind beispielsweise Nachlaufphasen einer Dauer zwischen 3 Minuten und 10 Minuten.

Wird in der Nachlaufphase eine Sendung von einer Reifendrucküberwachungseinrichtung empfangen (Schritt 12), startet die Auswerteeinheit für die betreffende Reifendrucküberwachungseinheit einen Timer (d.h. einen Zeitgeber), was in Figur 1 durch den Kasten 13 symbolisiert ist. Solange noch nicht von allen Reifendrucküberwachungseinrichtungen 1 Sendungen empfangen wurden, wird gemäß Schritt 11 immer wieder überprüft, ob Sendungen eingegangen sind oder die Nachlaufphase abgelaufen ist. Wenn von allen Reifendrucküberwachungseinrichtungen Sendungen empfangen wurden oder die Dauer der Nachlaufphase abgelaufen ist, wird die Auswerteeinheit heruntergefahren (Schritt 14). Im heruntergefahrenen Zustand ist der Empfänger nicht mehr empfangsbereit, es laufen aber noch die im Schritt 12 gestarteten Timer, die jeweils einer der Reifendrucküberwachungseinheiten zugeordnet ist.

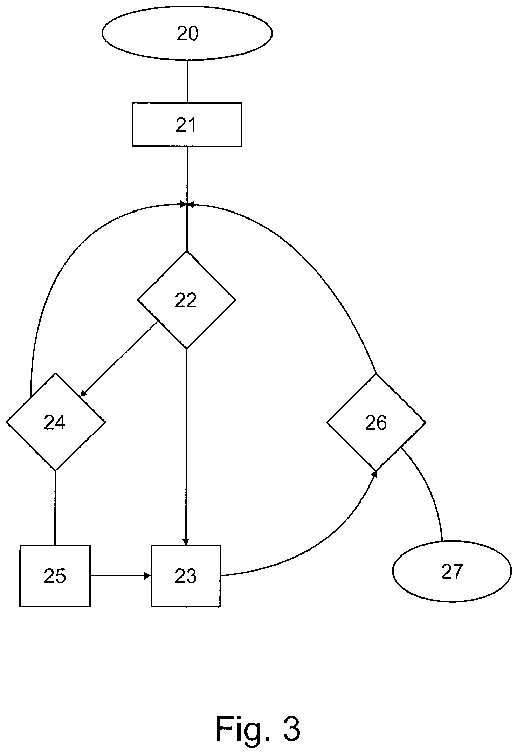

Fig. 3 zeigt ein Ablaufdiagramm für die zentrale Auswerteeinheit 2 des Reifendrucküberwachungssystems, welches das Verfahren nach der in Fig. 2 erläuterten Nachlaufphase beschreibt. Der Ablauf beginnt in Schritt 20 damit, dass einer der Timer abgelaufen ist, etwa ein Timer x. Es wird also eine Sendung der betreffenden Reifendrucküberwachungseinrichtung x erwartet und deshalb als Schritt 21 der Empfänger 3 aktiviert und ein weiterer Zeitgeber x1 gestartet, der die Zeitspanne überwacht, in welcher auf eine Sendung der Reifendrucküberwachungseinheit x gewartet wird. Als Schritt 22 wird dann überprüft, ob eine Sendung der Reifendrucküberwachungseinheit x empfangen wurde. Ist dies der Fall wird als Schritt 23 der Timer x erneut gestartet. Ist dies nicht der Fall wird als Schritt 24 geprüft, ob der Zeitgeber x1 abgelaufen ist, also das Zeitfenster verstrichen ist, in dem auf eine Sendung der Reifendrucküberwachungseinrichtung x gewartet wird. Falls ja wird in einem Schritt 25 dieses Zeitfenster für eine spätere Aktivierung vergrößert, so dass bei einem späteren Aktivierung des Empfängers 3 der Zeitgeber x1 ein entsprechend größeres Zeitfenster verstreichen lässt, damit die Chance verbessert wird eine Sendung der Reifendrucküberwachungseinrichtung x zu empfangen, Vom Schritt 25 geht die Auswerteeinheit zum Schritt 23, startet also den Timer x.

Nach dem Starten des Timers x im Schritt 23, wird im Schritt 26 geprüft, ob derzeit noch von anderen Reifendrucküberwachungseinrichtungen y Sendungen erwartet werden. Es wird also geprüft, ob ein anderer Timer y, der einer Reifendrucküberwachungseinrichtung y zu geordnet ist, abgelaufen ist und das zu ihm gehörende Zeitfenster, das durch einen Zeitgeber y1 überwacht wird, noch nicht abgelaufen ist. Falls noch auf eine Sendung einer anderen Reifendrucküberwachungseinrichtung y gewartet wird, wird das Verfahren mit Schritt 22 fortgesetzt, andernfalls wird der Empfänger im Schritt 27 deaktiviert.

Wie bereits erwähnt, sendet jede Reifendrucküberwachungseinrichtung des Fahrzeugs im Parkmodus Druckdaten in vorgegebenen Zeitabständen t1 von beispielsweise 3 bis 10 Minuten. Dementsprechend aktivieren die Timer den Empfänger in Zeitabständen t1-Δ, wobei Δ im Vergleich zu dem Zeitabstand t1 vernachlässigbar klein ist und bevorzugt weniger als 1 Sekunde, besonders bevorzugt weniger als 1 Millisekunde beträgt, beispielsweise weniger als 5 Mikrosekunden. Der Empfänger muss eine (relativ kurze) Zeit vor einer Sendung aktiviert werden, damit die Sendung zuverlässig empfangen werden kann.

Das Zeitfenster zum Empfang einer Sendung kann sehr kurz gewählt werden, beispielsweise weniger als 1 Sekunde, etwa weniger als 100 Millisekunden. Beispielsweise kann das Zeitfenster zum Empfang der Sendung weniger als das Hundertfache, etwa weniger als das Zwanzigfache der Dauer einer Sendung betragen. Die Belastung der Fahrzeugbatterie für derart kurze Aktivierungszeiten des Empfängers ist vorteilhaft klein.

Ein Empfang von Sendungen der Reifendrucküberwachungseinheiten kann erschwert sein, wenn mehrere Reifendrucküberwachungseinheiten gleichzeitig senden oder ihre Sendungen zeitlich überlappen. Dieser Fall ist an sich schon unwahrscheinlich, da die einzelnen Reifendrucküberwachungseinrichtungen durch Signale ihre jeweiligen Beschleunigungssensoren zum Übergang in den Parkmodus veranlasst werden und die verschiedenen Räder eines Fahrzeugs normalerweise leicht unterschiedlichen Beschleunigungen unterliegen. Um Probleme durch überlappende Sendungen verschiedener Reifendrucküberwachungseinrichtungen noch weiter zu vermeiden kann vorgesehen sein, dass die Zeitabstände t1, in denen die Reifendrucküberwachungseinheiten im Parkmodus senden, von Sendung zu Sendung um eine Sollwert variiert werden, insbesondere zufällig oder quasizufällig. Dabei wird zur Variation der Zeitabstand jeweils durch Addition eines kleinen Werts ε geringfügig geändert, der zufällig bestimmt oder nach einer mehr oder weniger komplexen Regel erzeugt wird, die synchrone Änderungen bei mehreren Reifendrucküberwachungseinheiten unwahrscheinlich macht. Der Wert von ε kann dabei beispielsweise zwischen dem Doppelten oder dem fünffachen der Dauer einer Sendung betragen, z.B. zwischen 10 Millisekunden und 50 Millisekunden. In diesem Fall ist also für die Zeitabstände t1 zwischen Sendungen nur ein Sollwert vorgegeben, der dann geringfügig variiert wird.

Um den Energieverbrauch bei längerer Parkdauer zu reduzieren, kann vorgesehen sein, dass die Timer der Auswerteeinheit 2 mit zunehmender Parkdauer auf immer größere Werte eingestellt werden, so dass nicht mehr jede Sendung einer Reifendrucküberwachungseinrichtung empfangen werden kann. Beispielsweise kann für den zweiten bis fünften Tag der Parkdauer vorgesehen sein, dass nur noch jedes vierte Datentelegramm einer Reifendrucküberwachungseinheit empfangen wird. Wenn eine Reifendrucküberwachungseinheit im Parkzustand in Zeitabständen t1 Datentelegramme mit Druckdaten aussendet, wird also im zweiten bis fünften Tag der Parkdauer der Empfänger dazu passend in Zeitabständen von dem Vierfachen von t1 aktiviert. Nach fünf Tagen kann der Empfang auf jedes zehnte Datentelegramm reduziert werden und nach noch größerer Zeit, etwa ab dem 21 Tag, kann die Aktivierung des Empfängers 3 ganz eingestellt werden, um die Fahrzeugbatterie zu schonen.

## Patentansprüche

1. Verfahren zum Überwachen des Reifendrucks eines Fahrzeugs mittels einer Reifendrucküberwachungseinrichtung (1), die einen Drucksensor (1a) zum Messen des Reifendrucks, einen Beschleunigungssensor (1b) und einen Sender (1e) zum drahtlosen Übertragen von Reifendruckdaten enthält, und einer zentralen Auswerteeinheit (2) des Fahrzeugs, die einen Empfänger (3) aufweist,
wobei bei parkendem Fahrzeug regelmäßig der Reifendruck von dem Drucksensor (1a) der Reifendrucküberwachungseinrichtung (1) gemessen wird, und bei parkendem Fahrzeug in vorgegebenen Zeitabständen Druckdaten von der Reifendrucküberwachungseinheit (1) gesendet werden, **dadurch gekennzeichnet, dass**
der Empfänger (3) in dazu passenden vorgegebenen Zeitabständen aktiviert wird, um die Druckdaten zu empfangen.

2. Verfahren nach Anspruch 1, **dadurch gekennzeichnet, dass** die Reifendrucküberwachungseinheit (1) einen Zeitgeber enthält, mit dem die Zeitpunkte ermittelt werden, zu denen der Sender (3) aktiviert wird, und die zentrale Auswerteeinheit (1) einen Zeitgeber enthält, der den Zeitpunkt einer Aktivierung des Empfängers (3) ermittelt und bei jedem Empfang einer Sendung der Reifendrucküberwachungseinrichtung (1) nachjustiert wird.

3. Verfahren nach einem der vorstehenden Ansprüche, **dadurch gekennzeichnet, dass** die zentrale Auswerteeinheit (2) einen Zeitgeber enthält, der den Empfänger (3) zum Empfang der nächsten Sendung aktiviert und bei jedem Empfang einer Sendung zurückgesetzt wird.

4. Verfahren nach einem der vorstehenden Ansprüche, **dadurch gekennzeichnet, dass** die Reifendrucküberwachungseinheit (1) in Abhängigkeit von Signalen des Beschleunigungssensors (1b) zwischen einem Fahrtmodus und einem Parkmodus wechselt, wobei Reifendruckdaten in dem Parkmodus in anderen Zeitabständen als in dem Fahrtmodus ausgesandt werden.

5. Verfahren nach einem der vorstehenden Ansprüche, **dadurch gekennzeichnet, dass** der Empfänger (3) nach dem Abschalten des Motors des Fahrzeugs noch während einer Nachlaufzeit aktiviert bleibt.

6. Verfahren nach Anspruch 5, **dadurch gekennzeichnet, dass** die Nachlaufzeit wenigstens so groß wie die vorgegebenen Zeitabstände zwischen Sendungen bei parkendem Fahrzeug ist.

7. Verfahren nach Anspruch 5 oder 6, **dadurch gekennzeichnet, dass** die Nachlaufzeit nicht mehr als doppelt so groß wie die vorgegebenen Zeitabstände, in denen der Empfänger (3) bei Beginn einer Parkdauer aktiviert wird.

8. Verfahren nach einem der vorstehenden Ansprüche, **dadurch gekennzeichnet, dass** die Zeitabstände, in denen der Empfänger (3) bei parkendem Fahrzeug aktiviert wird, nach einer vorgegebenen Zeitspanne erhöht werden, vorzugsweise verdoppelt.

9. Verfahren nach einem der vorstehenden Ansprüche, **dadurch gekennzeichnet, dass** bei parkendem Fahrzeug der Empfänger (3) deaktiviert wird, nachdem eine Sendung empfangen wurde oder eine Zeitspanne vergangen ist, die kleiner als der vorgegebene Zeitabstand zwischen Sendungen bei parkendem Fahrzeug ist.

10. Verfahren nach einem der vorstehenden Ansprüche, **dadurch gekennzeichnet, dass** die vorgegebenen Zeitabstände, in denen bei parkendem Fahrzeug Druckdaten von der Reifendrucküberwachungseinheit (1) gesendet werden, zur Vermeidung von Überdeckungen mit Sendungen anderer Reifendrucküberwachungseinheiten (1) des Fahrzeugs um einen Sollwert herum variiert werden.

11. Verfahren nach Anspruch 10, **dadurch gekennzeichnet, dass** die Variationen um den Sollwert nicht mehr als das Zehnfache der Zeitdauer einer Sendung betragen.

## Claims

1. Method for monitoring the tyre pressure of a vehicle by means of a tyre pressure monitoring device (1), which comprises a pressure sensor (1a) for measuring the tyre pressure, an acceleration sensor (1b) and a transmitter (1e) for wireless trans-mission of tyre pressure data, and
a central evaluation unit (2) of the vehicle, which comprises a receiver (3), wherein when the vehicle is parked, the tyre pressure is regularly measured by the pressure sensor (1a) of the tyre pressure monitoring device (1), and when the vehicle is parked, pressure data are sent by the tyre pressure monitoring device (1) at preset time intervals, **characterised in that**
the receiver (3) is actuated at matching preset intervals to receive the pressure data.

2. Method according to claim 1, **characterised in that** the tyre pressure monitoring device (1) comprises a timer which is used to determine the times at which the transmitter (3) is activated, and the central evaluation unit (1) comprises a timer which determines the time of activation of the receiver (3) and is readjusted each time a transmission from the tyre pressure monitoring device (1) is received.

3. Method according to any one of the preceding claims, **characterised in that** the central evaluation unit (2) comprises a timer which activates the receiver (3) to receive the next transmission and is reset each time a transmission is received.

4. Method according to any one of the preceding claims, **characterised in that** the tyre pressure monitoring unit (1) switches between a driving mode and a parking mode as a function of signals from the acceleration sensor (1b), tyre pressure data being transmitted in the parking mode at different time intervals than in the driving mode.

5. Method according to any one of the preceding claims, **characterised in that** the receiver (3) remains activated for a cooling-down time after the engine of the vehicle has been switched off.

6. Method according to claim 5, **characterised in that** the stopping time is at least as long as the predetermined time intervals between transmissions when the vehicle is parked.

7. Method according to claim 5 or 6, **characterised in that** the cooling-down time is not more than twice as long as the predetermined time intervals at which the receiver (3) is activated at the beginning of a parking period.

8. Method according to any one of the preceding claims, **characterised in that** the time intervals at which the receiver (3) is activated when the vehicle is parked are increased after a predetermined period of time, preferably doubled.

9. Method according to any one of the preceding claims, **characterised in that**, when the vehicle is parked, the receiver (3) is deactivated after a transmission has been received or a period of time has elapsed which is less than the predetermined time interval between transmissions when the vehicle is parked.

10. Method according to any one of the preceding claims, **characterised in that** the predetermined time intervals at which pressure data are transmitted by the tyre pressure monitoring device (1) when the vehicle is parked are varied around a set-point value in order to avoid overlapping with transmissions from other tyre pressure monitoring units (1) of the vehicle.

11. Method according to claim 10, **characterised in that** the variations around the setpoint value are no more than ten times the duration of a transmission.

## Revendications

1. Procédé de surveillance de pression de pneus d'un véhicule au moyen d'une unité de surveillance de pression de pneus (1), qui contient un capteur de pression (1a) pour mesurer la pression de pneus, un capteur d'accélération (1b) et un émetteur (1e) pour la transmission sans fil des données de pression de pneus, et une unité centrale d'évaluation (2) du véhicule, qui possède un récepteur (3),
dans lequel, lorsque le véhicule est stationné, la pression de pneus est mesurée régulièrement par le capteur de pression (1a) de l'unité de surveillance de pression de pneus (1) et, lorsque le véhicule est stationné, des données de pression sont transmises par l'unité de surveillance de pression de pneus à des intervalles prédéterminés véhicule, **caractérisé par le fait que** le récepteur (3) est actionné à des intervalles de temps prédéterminés appropriés pour recevoir les données de pression.

2. Procédé selon la revendication 1, **caractérisé par le fait que** l'unité de surveillance de pression de pneus (1) contient une minuterie qui est utilisée pour déterminer les moments auxquels l'émetteur (3) est activé, et que l'unité centrale d'évaluation (1) contient une minuterie qui détermine le moment de l'activation du récepteur (3) et qui est réajustée à chaque réception d'une transmission de l'unité de surveillance de pression de pneus (1).

3. Procédé selon l'une des revendications précédentes, **caractérisé par le fait que** l'unité centrale d'évaluation (2) contient une minuterie qui active le récepteur (3) pour recevoir la transmission suivante et qui est remise à zéro à chaque réception d'une transmission.

4. Procédé selon l'une des revendications précédentes, **caractérisé par le fait que** l'unité de surveillance de pression de pneus (1) passe d'un mode de conduite à un mode de stationnement en fonction des signaux émis par le capteur d'accélération (1b), les données de pression de pneus étant transmises en mode de stationnement à des intervalles de temps différents de ceux du mode de conduite.

5. Procédé selon l'une des revendications précédentes, **caractérisé par le fait que** le récepteur (3) reste activé pendant un temps de poursuite après l'arrêt du moteur du véhicule.

6. Procédé selon la revendication 5, **caractérisé par le fait que** le temps de poursuite est au moins aussi longue que les intervalles de temps prédéterminés entre les transmissions lorsque le véhicule est stationné.

7. Procédé selon les revendications 5 ou 6, **caractérisé par le fait que** le temps de poursuite ne dépasse pas le double des intervalles de temps prédéterminés auxquels le récepteur (3) est activé au début d'une période de stationnement.

8. Procédé selon l'une des revendications précédentes, **caractérisé par le fait que** les intervalles de temps pendant lesquels le récepteur (3) est activé lorsque le véhicule est stationné sont augmentés après une période de temps prédéterminée, de préférence doublés.

9. Procédé selon l'une des revendications précédentes, **caractérisé par le fait que**, lorsque le véhicule est en stationnement, le récepteur (3) est désactivé après la réception d'une transmission ou l'écoulement d'une période de temps inférieure à l'intervalle de temps prédéterminé entre les transmissions lorsque le véhicule est en stationnement.

10. Procédé selon l'une des revendications précédentes, **caractérisé par le fait que** les intervalles de temps prédéterminés auxquels les données de pression sont transmises par l'unité de surveillance de pression de pneus (1) lorsque le véhicule est stationné sont modifiés autour d'une valeur de consigne afin d'éviter le chevauchement avec des transmissions provenant d'autres unités de surveillance de pression de pneus (1) du véhicule.

11. Procédé selon la revendication 10, **caractérisé par le fait que** les variations autour de la valeur de consigne ne sont pas supérieures à dix fois la durée d'une transmission.
